# EUROPEAN PATENT APPLICATION

(11) **EP 1 892 131 A1**
(43) Date of publication of application: **27.02.2008**
(21) Application number: 07016292.0
(22) Date of filing: 20.08.2007
(51) Int. Cl.: B60H 1/00

(54) **Vehicle air conditioner**

(30) Priority: 23.08.2006 JP 2006226738
(71) Applicant: Calsonic Kansei Corporation, Tokyo 164-8602 (JP); Nissan Motor Co., Ltd., Kanagawa 221-0023 (JP)
(72) Inventor: Kamiyama, Naohisa, Tokyo 164-8602 (JP); Soma, Hiroshi, Tokyo 164-8602 (JP); Suematsu, Nobuyasu, Tokyo 164-8602 (JP); Nagayama, Hiroki, Atsugi-shi Kanagawa 243-0192 (JP); Kakiuchi, Syuuji, Atsugi-shi Kanagawa 243-0192 (JP); Kato, Hajime, Atsugi-shi Kanagawa 243-0192 (JP)
(74) Representative: Weigelt, Udo

(57) **Abstract**

A vehicle air conditioner comprising: an intake box (8) provided in an inside of an instrument panel (3) at a front part of a passenger compartment (2) of a vehicle and having a recirculation intake (5), a fresh-air intake (6), and an intake door (7) for opening/closing the intakes (5, 6); a fan unit (9) provided in the inside of the instrument panel (3) and connected to the downstream of the intake box (8); a temperature control unit (11) provided in the inside of the instrument panel (3) and connected to the downstream of the fan unit (9) and incorporating a cooling heat exchanger (10); a blow duct (12,13,14) provided in the inside of the instrument panel (3) and connecting the temperature control unit (11) and the passenger compartment (2) such that air flows from the temperature control unit (11) to the passenger compartment (2) via the blow duct (12,13,14); a communicating port (18) formed at the blow duct (12) or the temperature control unit (11) and communicating with the inside of the instrument panel (3); and a door (19) configured to open/close the communicating port (18).

## Description

### CROSS REFERENCE TO RELATED APPLICATIONS AND INCORPORATION BY REFERENCE

This application is based upon and claims the benefit of priority from the prior Japanese Patent Application No. 2006-226738 filed on 23rd August 2006; the entire contents of which are incorporated herein by reference.

### BACKGROUND OF THE INVENTION

### 1. Felid of the Invention

The present invention relates to a vehicle air conditioner to condition air in a passenger compartment of a vehicle.

### 2. Description of Related Art

If a vehicle is parked for a long time under the blazing sun, an instrument panel at a front part of a passenger compartment of the vehicle is heated to very high temperatures (50 to 70°C) with sunrays transmitted through a front windshield at the front part of the passenger compartment. When starting such a vehicle, the instrument panel serves as a heat source to prevent the passenger compartment from being efficiently cooled.

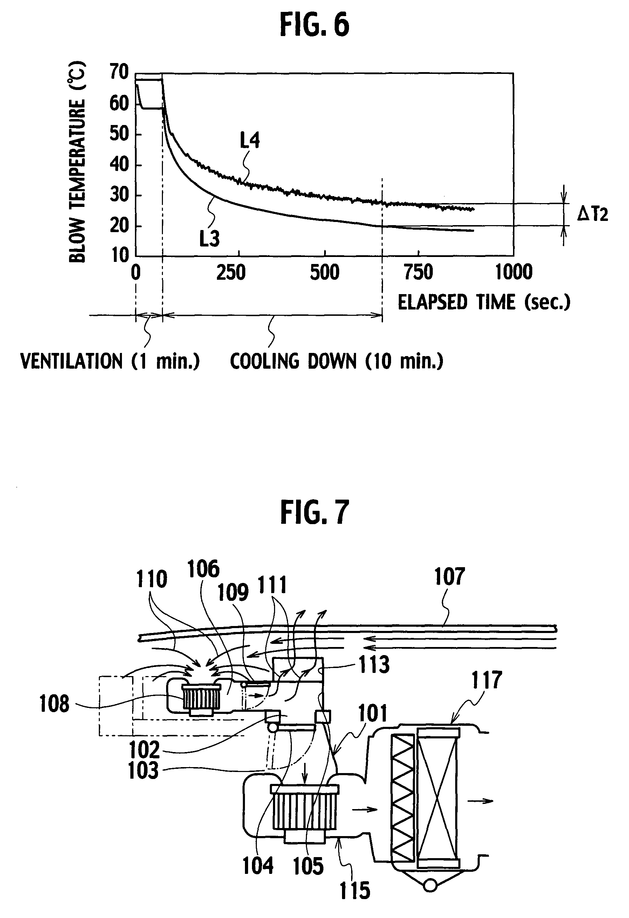

A related art (see Japanese Unexamined Patent Application Publication No. 2005-186860) disclose a vehicle air conditioner which is disposed in the inside of an instrument panel at front part of a passenger compartment of a vehicle and is capable of removing heat from the inside of an instrument panel. Figure 7 shows the vehicle air conditioner. An intake box 101 has a fresh-air intake 102, a recirculation intake 103, and a door 104 to open/close the intakes 102 and 103. A downstream part of the intake box 101 is connected to a fan unit 115. A downstream part of the fan unit 115 is connected to a temperature control unit 117. The fresh-air intake 102 of the intake box 101 communicates through a fresh-air passage 105 with a fresh-air intake 113 of a cowl box that is exposed to the outside of the vehicle. An intermediate part of the fresh-air passage 105 is connected to an outlet of a vent passage 106. An inlet of the vent passage 106 is exposed to the inside of the instrument panel 107. The vent passage 106 includes a fan 108 and is opened/closed with a door 109.

This related art operates a recirculation mode by opening the recirculation intake 103 of the intake box 101, closing the fresh-air intake 102 thereof, opening the door 109 of the vent passage 106, and activating the fan 108. In the recirculation mode, heated air 110 inside the instrument panel 107 is drawn into the vent passage 106, is reversely passed (see arrows 111 in Fig. 7) through the fresh-air passage 105, and is discharged outside from the fresh-air intake 113 of the cowl box.

### SUMMARY OF THE INVENTION

The above-mentioned related art may remove heated air 110 from the inside of the instrument panel 107 to the outside of the vehicle via the vent passage 106, the fresh-air intake 105, and the fresh-air intake 113 of the cowl box. The related art, however, has little effect of cooling the heated instrument panel 107 and the inside thereof.

In a limited narrow space in the vicinity of the intake box 101, there are arranged the vent passage 106, fan 108, and door 109, and therefore, the related art must find a proper layout. This raises a problem of complicating the layout designing. When the door 104 is operated to open the recirculation intake 103 of the intake box 101 and close the fresh-air intake 102 and the fan 108 is turned on, air 110 inside the instrument panel 107 is drawn into the vent passage 106 to produce a negative pressure inside the instrument panel 107. The negative pressure draws fresh air through leakage gaps of the body of the vehicle. The leakage gaps have large air-flow resistance to make a ventilation flow rate insufficient At the same time, the leakage gaps may introduce outside smell and dust into the vehicle.

In consideration of the problems of the related art, an object of the present invention is to provide a vehicle air conditioner capable of efficiently cooling an instrument panel and the inside thereof

An aspect of the present invention provides a vehicle air conditioner comprising: an intake box provided in an inside of an instrument panel at a front part of a passenger compartment of a vehicle and having a recirculation intake, a fresh-air intake, and an intake door for opening/closing the intakes; a fan unit provided in the inside of the instrument panel and connected to the downstream of the intake box; a temperature control unit provided in the inside of the instrument panel and connected to the downstream of the fan unit and incorporating a cooling heat exchanger, a blow duct provided in the inside of the instrument panel and connecting the temperature control unit and the passenger compartment such that air flows from the temperature control unit to the passenger compartment via the blow duct; a communicating port formed at the blow duct or the temperature control unit and configured to communicate with the inside of the instrument panel; and a door configured to open/close the communicating port.

### BRIEF DESCRIPTION OF THE DREWINGS

Figure 1 is a vertical section showing a vehicle air conditioner according to an embodiment of the present invention;
Figure 2 is an explanatory view showing a vehicle in which the vehicle air conditioner of Figs. 1 is installed;
Figure 3 is an enlarged view showing a defroster duct of the vehicle air conditioner of Fig. 1;
Figure 4 is a flowchart showing steps of carrying out ventilation with the vehicle air conditioner of Fig. 1 when one gets in the vehicle;
Figure 5 is a graph showing average temperatures in tested vehicles in cooling down tests;
Figure 6 is a graph showing vent blow temperatures in the cooling down tests; and
Figure 7 is a vertical section showing a vehicle air conditioner according to a related art.

### DETAIL DESCRIPTION OF EMBODIMENTS

A vehicle air conditioner according to an embodiment of the present invention will be explained with reference to drawings.

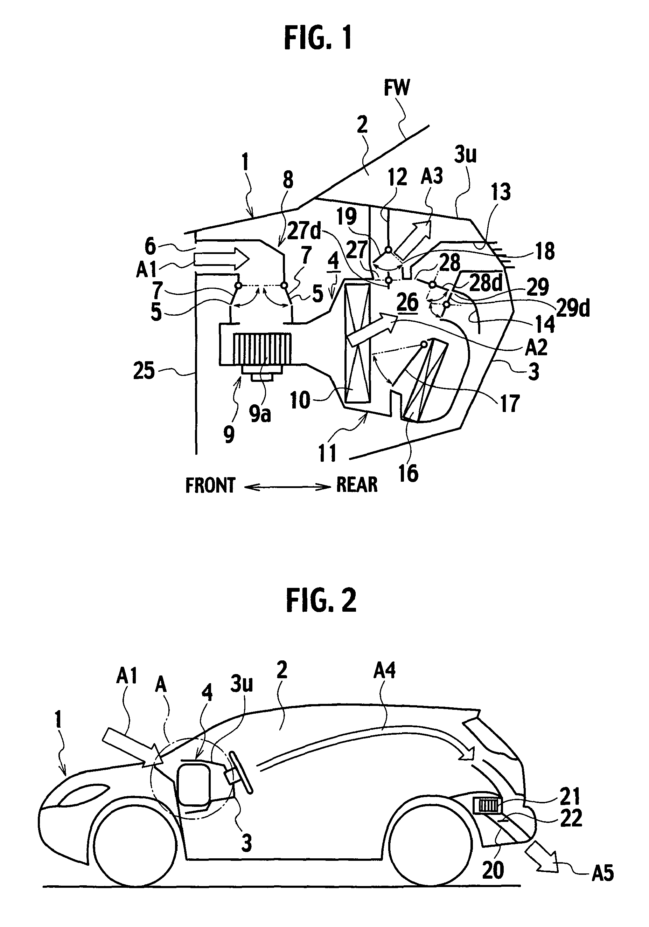

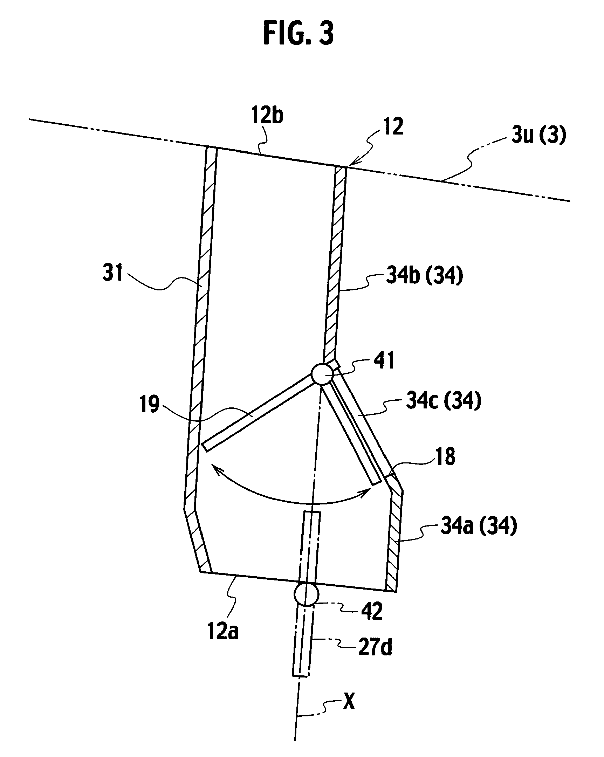

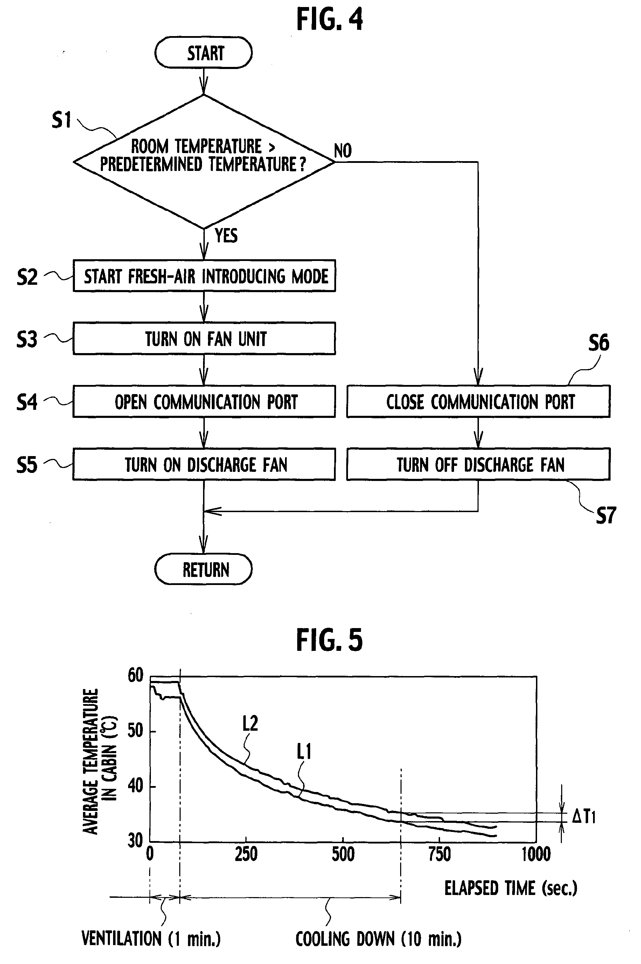

Figure 1 is a vertical section showing a vehicle air conditioner according to an embodiment of the present invention, Fig. 2 is an explanatory view showing a vehicle in which the vehicle air conditioner of Fig. 1 is installed, Fig. 3 is an enlarged view showing a defroster duct of the vehicle air conditioner of Fig. 1, Fig. 4 is a flowchart showing steps of carrying out ventilation with the vehicle air conditioner of Fig. 1 when one gets in the vehicle, Fig. 5 is a graph showing average temperatures in tested vehicles in cooling down tests, and Fig. 6 is a graph showing air temperatures sent from vents in the cooling down tests. Figure 1 is an enlarged vertical section showing a part A of Fig. 2.

In Figs. 1 and 2, the vehicle 1 has an engine room or a front compartment and a passenger room or a passenger compartment 2, which are divided by a dash panel 25. At a front part of the passenger compartment 2, there is an instrument panel 3. An air conditioning unit 4 is disposed in an inside space defined by the instrument panel 3(in a space that is located in front of the instrument panel 3 and behind the dash panel 25). The air conditioning unit 4 includes an intake box 8 having a recirculation intake 5, a fresh-air intake 6, and an intake door 7 for opening/closing the intakes 5 and 6, a fan unit 9 connected to a downstream part of the intake box 8, a temperature control unit 11 connected to a downstream part of the fan unit 9 and incorporating a cooling heat exchanger or an evaporator 10, and blow ducts 12,13, and 14 communicating with the downstream of the temperature control unit 11 and the passenger compartment 2. The temperature control unit 11 includes the cooling heat exchanger 10 for cooling air, a heating heat exchanger 16 for heating air arranged downstream from the cooling heat exchanger 10, and a mix door 17. The mix door 17 is arranged between the cooling heat exchanger 10 and the heating heat exchanger 16, to control air flow ratio between air flowing through the heating heat exchanger 16 and air bypassing the heating heat exchanger 16.

Downstream from the cooling heat exchanger 10 and heating exchanger 16, there is an air mixing chamber 26 to mix cool air from the cooling heat exchanger 10 and hot air from the heating heat exchanger 16. Downstream from the air mixing chamber 26, there are openings 27, 28, and 29 to which the blow ducts 12, 13, 14 are connected, respectively. The openings 27, 28, and 29 have blow mode doors 27d, 28d, and 29d to open/close the openings 27, 28, and 29, respectively. The blow mode doors 27d, 28d, and 29d are selectively opened/closed to guide conditioned air from the temperature control unit 4 through the blow ducts 12,13, and 14 into the passenger compartment 2.

The blow duct 12 is a defroster duct that blows conditioned air from the temperature control unit 11 toward a front windshield FW of the passenger compartment 2. The blow duct 13 is a vent duct that blows conditioned air from the temperature control unit 11 toward the upper body of a passenger in each front seat. The blow duct 14 is a foot duct that blows conditioned air from the temperature control unit 11 toward the lower body of a passenger in each front seat.

According to the embodiment, the defroster duct 12 is formed with a communicating port 18 to communicate with the inside and the outside of the defroster duct 12 such that the communicating port 18 communicates with the inside of the defroster duct 12 and the inside of the instrument panel 3. The defroster duct 12 incorporates a door 19 to open/close the communicating port 18. The communicating port 18 of the defroster duct 12 is diagonally oriented toward an upper rear side of the vehicle 1, more precisely, toward a top wall 3u of the instrument panel 3.

With reference to Fig. 3, the defroster duct 12 will be explained in detail. The defroster duct 12 substantially vertically extends from the temperature control unit 11 toward the top wall 3u of the instrument panel 3. An outer wall of the defroster duct 12 includes a front wall 31, a rear wall 34, and left and right side walls (not shown). The rear wall 34 is formed with the communicating port 18. The rear wall 34 includes a lower wall portion 34a arranged upstream from the communicating port 18 (adjacent to an inlet 12a of the defroster duct 12), an upper wall portion 34b arranged downstream from the communicating port 18 (adjacent to an outlet 12b of the defroster duct 12), and a step wall portion 34c connecting the lower wall portion 34a and upper wall portion 34b to each other, in which the communicating port 18 is formed.

The lower wall portion 34a is bulged out relative to the upper wall portion 34b toward the rear side of the vehicle such that the step wall portion 34c extends toward the upper front side and faces toward the upper rear side of the vehicle. Therefore, the communicating port 18 formed in the step wall portion 34c is open toward the top wall 3u of the instrument panel 3.

A rotary shaft 41 of the door 19 is disposed downstream from the communicating port 18 along the defroster duct 12 and at the upper edge of the communicating port 18. The door 19 rotates to change the opening ratio between the defroster duct 12 and the communication port 18 such that the opening of the defroster duct 12 becomes larger as the opening of the communication port 18 is made smaller and the opening of the defroster duct 12 becomes smaller as the opening of the communication port 18 is made larger. The door 19 fully opens the defroster duct 12 while fully closing the communicating port 18, and fully closes the defroster duct 12 while fully opening the communicating port 18. When closing the defroster duct 12 and opening the communicating port 18, the door 19 points the top wall 3u of the instrument panel 3 to smoothly guide cool air from the communicating port 18 toward the top wall 3u.

The blow mode door 27d for opening/closing the inlet 12a of the defroster duct 12 has a rotary shaft 42, which is on an extension line X extended from a lower end of the upper wall portion 34b. When fully opened, the blow mode door 27d agrees with the extension line X.

At the rear of the passenger compartment 2, there is an external passage 20 communicating with the inside and outside of the vehicle 1, as shown in Fig. 2. The external passage 20 is provided with a discharge fan 21 and a door 22. The door 22 is, for example, a drafter door that is flexible to be automatically closed in original form and is opened by wind pressure produced when the discharge fan 21 is operated.

Figure 4 is a flowchart showing steps of carrying out ventilation with the vehicle air conditioner of Fig. 1 when one gets in the vehicle 1. Namely, the steps shown in Fig. 4 are carried out when it is detected that one gets in the vehicle 1 in response to a signal from an electronic key (not shown) to open/close a door of the vehicle 1. Step S 1 determines whether or not a temperature in the passenger compartment 2 is higher than a predetermined temperature (for example, 40°C). If the passenger compartment temperature is higher than the predetermined temperature, step S2 is carried out. Step S2 sets the temperature control unit 11 to a fresh air introducing mode (PRE) and establishes a defroster blowing mode by opening the defroster duct 12 and closing the vent duct 13 and foot duct 14. Thereafter, step S3 sets the fan unit 9 to a maximum air flow to draw fresh air from the fresh-air intake 6. Step S4 opens the door 19 of the communicating port 18. Step S5 turns on the discharge fan 21 of the external passage 20. Thereafter, step S1 is again carried out With these steps, the communicating port 18 of the defroster duct 12 becomes passable, the intake box 8 is set to the fresh-air introducing mode, and the fan unit 9 is operated. As a result, fresh air having a relatively low temperature is drawn into the vehicle 1 as indicated with an arrow A1. At the same time, the cooling heat exchanger 10 produces cool air, which is sent through the defroster duct 12 to the inside of the instrument panel 3 as indicated with arrows A2 and A3. The cool air cools the inside of the instrument panel 3, flows through the passenger compartment 2 from the instrument panel 3 as indicated with an arrow A4, and goes outside from the rear of the passenger compartment 2 as indicated with an arrow A5. In this way, hot air is purged from the passenger compartment 2.

If step S2 determines that the temperature in the passenger compartment 2 is not higher than the predetermined temperature, there is no need of cooling the inside of the instrument panel 3, and therefore, step S6 is carried out Step S6 closes the communicating port 18 with the door 19 and step S7 stops the discharge fan 21 to close the door 22. Thereafter, step S1 is again carried out.

In this way, the embodiment uses cool air generated by the cooling heat exchanger 10 of the temperature control unit 11 to cools the instrument panel 3 and the inside thereof that are at high temperatures to serve as heat sources when a person gets in the vehicle 1 after, for example, the vehicle 1 is parked for a long time under the sun.

### Effects of the embodiment

According to the embodiment, the vehicle air conditioner includes the air conditioning unit disposed in the inside of the instrument panel 3 which includes the temperature control unit 11 incorporating the cooling heat exchanger 10 and the blow ducts 12,13, and 14 connected to the downstream of the temperature control unit 11 and the passenger compartment 2. One of the blow ducts (the defroster duct 12 in this embodiment) is formed with the communicating port 18 to communicate with the inside and outside of the defroster duct 12 and includes the door 19 to open/close the communicating port 18.

The cooling heat exchanger 10 of the temperature control unit 11 generates cool air to cool the inside of the instrument panel 3 that will be a heat source after the vehicle 1 is parked for a long time under the blazing sun. The embodiment can improve the cooling ability of the passenger compartment 2 of the vehicle 1. According to the embodiment, the blow duct 12 is provided with the communicating port 18 and door 19. This configuration allows a relatively easy layout designing without changing the existing intake box 8 and temperature control unit 11.

According to the embodiment, the inside of the instrument panel 3 is ventilated by drawing fresh air through the ftesh-air intake 6 instead of leakage gaps of the vehicle 1. Accordingly, the embodiment can utilize an existing air filter (not shown) in the air conditioning unit 4 to remove smell and dust from fresh air to be drawn into the vehicle 1. Compared with drawing fresh air through the leakage gaps of the vehicle 1, drawing fresh air through the fresh-air intake 6 involves smaller air-flow resistance, to thereby increase a ventilation flow rate. Accordingly, the embodiment can effectively cool the instrument panel 3 and the inside thereof

According to the embodiment, the communicating port 18 faces the top wall 3u of the instrument panel 3. This configuration can blow cool air to the top wall 3u of the instrument panel 3 that is easily heated to high temperatures, and therefore, can improve the cooling efficacy of the vehicle 1.

According to the embodiment, the blow duct 12 provided with the communicating port 18 is the defroster duct 12 extending from the temperature control unit 11 toward the top wall 3u of the instrument panel 3. Compared with the other blow ducts (vent duct 13 and foot duct 14), the defroster duct 12 allows the communicating port 18 to be located closer to the top wall 3u of the instrument panel 3, to effectively cool the top wall 3u.

According to the embodiment, the wall 34 of the blow duct 12 in which the communicating port 18 includes the lower wall portion 34a arranged upstream from the communicating port 18, the upper wall portion 34b arranged downstream from the communicating port 18, and the step wall portion 34c. The step wall portion 34c connects the lower wall portion 34a and upper wall portion 34b to each other and is formed with the communicating port 18. The lower wall portion 34a is off to the outside relative to the upper wall portion 34b. This arrangement allows the communicating port 18 to orient the top wall 3u of the instrument panel 3.

This simple configuration enables the upwardly oriented blow duct 12 to be provided with the communicating port 18 facing the top wall 3u of the instrument panel 3. Since the lower wall portion 34a upstream from the communicating port 18 is bulged out, air smoothly flows toward the communicating port 18, to easily maintain a large flow rate of cool air passing through the communicating port 18.

According to the embodiment, the door 19 has the rotary shaft 41 that is arranged downstream from the communicating port 18 (on the outlet 12b side of the communicating port 18), so that the door 19 may entirely open the blow duct 12 while entirely closing the communicating port 18, or entirely close the blow duct 12 while wholly opening the communicating port 18. When closing the blow duct 12 and opening the communicating port 18, the door 19 points the top wall 3u of the instrument panel 3.

As a result, cool air from the communicating port 18 can smoothly be guided to the top wall 3u of the instrument panel 3, i.e., a large quantity of cool air can hit the top wall 3u of the instrument panel 3 to improve the cooling effect.

According to the embodiment, the blow mode door 27d for opening/closing the inlet 12a of the blow duct 12 is arranged upstream from the door 19. The blow mode door 27d has the rotary shaft 42 that is on the extension line X extended from a lower end of the upper wall portion 34b.

When opened, the blow mode door 27d provides a regulating effect to provide a smooth air flow. This results in improving the cooling effect of the top wall 3u of the instrument panel 3.

According to the embodiment, the external passage 20 is separately arranged from the fresh-air intake 6 of the intake box 8 and has the discharge fan 21 to forcibly discharge air from the passenger compartment 2. This configuration improves a ventilation flow rate to effectively cool the instrument panel 3 and the inside thereof

According to the embodiment, the external passage 20 is arranged at the rear of the passenger compartment 2. Accordingly, cool air blown into the inside of the instrument panel 3 that is at the front of the passenger compartment 2 flows from the front to the rear of the passenger compartment 2 and is discharged from the external passage 20 at the rear of the passenger compartment 2 to the outside of the vehicle 1. With this, heated air in the whole passenger compartment 2 is purged out to the outside of the vehicle. This results in further improving the cooling performance of the passenger compartment 2.

The applicant of the present invention carried out cooling down tests at an ambient temperature of 40°C, a humidity of 50%, and a solar irradiance of 1046 W. Under these conditions, the vehicle 1 was left for 60 minutes. Thereafter, the vehicle air conditioner of the embodiment was operated for one minute to ventilate the inside of the instrument panel 3, and then, a normal cooling operation was carried out for ten minutes. According to the tests, average temperatures in the tested room (passenger compartment 2) changed as indicated with a curve L1 shown in Fig. 5 and blow temperatures from temperature control unit changed as indicated with a curve L3 shown in Fig. 6. When no ventilation of the embodiment was conducted, average temperatures in the tested room (passenger compartment 2) changed as indicated with a curve L2 shown in Fig. 5 and blow temperatures from temperature control unit changed as indicated with a curve L5 shown in Fig. 6. Compared with conducting no ventilation, conducting the ventilation of the embodiment shows an average room temperature difference ΔT1 of about 2°C (Fig. 5) and a blow temperature difference ΔT2 of about 8°C (Fig. 6). This confirms that executing ventilation by the vehicle air conditioner according to the embodiment when a person gets in the vehicle 1 improves the cooling efficiency of the passenger compartment 2.

The above-mentioned embodiment arranges the communicating port 18 and door 19 in the defroster duct 12 that is oriented toward the front windshield FW of the passenger compartment 2. This does not limit the present invention. The temperature control unit 11 may have a communicating port communicating with the inside and outside of the temperature control unit 11 and a door for opening/closing the port. The vent duct 13 that is oriented toward the upper half of a passenger in each front seat in the passenger compartment 2 may have a communicating port communicating with the inside and outside of the vent duct 13 and a door for opening/closing the port. The foot duct 14 that is oriented toward the lower half of a passenger in each front seat in the passenger compartment 2 may have a communicating port communicating with the inside and outside of the foot duct 14 and a door for opening/closing the port. It is preferable to form the communicating port in the vent duct 13or in the defroster duct 12 than to form the same in the foot duct 14, so that the communicating port is located in the vicinity of the top wall 3u of the instrument panel 3 that is easily heated to high temperatures. Like the embodiment, it is more preferable to form the communicating port in the defroster duct 12 that is above the temperature control unit 11 than to form the same in the vent duct 13, so that the communicating port may be closer to the top wall 3u of the instrument panel 3.

According to the embodiment, the door 22 of the external passage 20 is a drafter door that automatically closes due to its own flexibility and opens due to wind pressure produced when the discharge fan 21 operates. Instead of the drafter door, it is possible to use a door that automatically closes due to its own weight, or any other door.

Although the present invention has been explained with reference to certain embodiments, the present invention is not limited to the embodiments. Modifications and variations of the embodiments can be made without departing from the spirit and scope of the appended claims. The embodiments, therefore, are only for illustrative purposes and are not intended to limit the present invention.

## Claims

1. A vehicle air conditioner comprising:
an intake box (8) provided in an inside of an instrument panel (3) at a front part of a passenger compartment (2) of a vehicle and having a recirculation intake (5), a fresh-air intake (6), and an intake door (7) for opening/closing the intakes (5,6);
a fan unit (9) provided in the inside of the instrument panel (3) and connected to the downstream of the intake box (8);
a temperature control unit (11) provided in the inside of the instrument panel (3) and connected to the downstream of the fan unit (9) and incorporating a cooling heat exchanger (10);
a blow duct (12,13,14) provided in the inside of the instrument panel (3) and connecting the temperature control unit (11) and the passenger compartment (2) such that air flows from the temperature control unit (11) to the passenger compartment (2) via the blow duct (12,13,14);
a communicating port (18) formed at the blow duct (12) or the temperature control unit and configured to communicate with the inside of the instrument panel (3); and
a door (19) configured to open/close the communicating port (18).

2. The vehicle air conditioner according to claim 1, wherein:
the communicating port is formed at the temperature control unit (11) and oriented toward the top wall (3u) of the instrument panel (3).

3. The vehicle air conditioner according to claim 1, wherein:
the communicating port (18) is formed at the blow duct (12) which extends from the temperature control unit (11) toward a top wall (3u) of the instrument panel (3); and
the communicating port (18) is oriented toward the top wall (3u) of the instrument panel (3).

4. The vehicle air conditioner according to claim 3, wherein:
the blow duct (12) includes a wall (34) in which the communicating port (18) is formed,
the wall (34) comprises a lower wall portion (34a) upstream from the communicating port and an upper wall portion (34b) downstream from the communicating port, and
the lower wall portion is bulged out relative to the upper wall portion.

5. The vehicle air conditioner according to claim 3, wherein:
the door (19) has a rotary shaft (41) downstream from the communicating port (18) and is configured to point the top wall (3u) of the instrument panel (3) while closing the blow duct (12) and opening the communicating port (18).

6. The vehicle air conditioner according to claim 5, further comprising:
a blow mode door (27d) arranged upstream from the door (19) and configured to open/close the blow duct (12), a rotary shaft (42) of the blow mode door (27d) disposed on an extension line (X) of a lower end of the upper wall portion (34b).

7. The vehicle air conditioner according to claim 1, further comprising:
an external passage (20) communicating with the inside and outside of the vehicle, the external passage (20) being provided with a discharge fan (21) configured to blow air through the external passage (20) and a door (22) configured to open and close the external passage (20).

8. The vehicle air conditioner according to claim 7, wherein:
the external passage (20) is arranged at a rear part of the passenger compartment (2).
